# EUROPÄISCHE PATENTANMELDUNG

(11) **EP 0 535 487 A1**
(43) Veröffentlichungstag der Anmeldung: **07.04.1993**
(21) Anmeldenummer: 92116093.3
(22) Anmeldetag: 21.09.1992
(51) Int. Cl.: C08F 8/44

(54) **Extrusionsverfahren zur Herstellung von ionisch vernetzten Ethylencopolymerisaten (Ionomeren)**

(30) Priorität: 01.10.1991 DE 4132683
(71) Anmelder: BASF Aktiengesellschaft, D-67063 Ludwigshafen (DE)
(72) Erfinder: Muehlenbernd, Thomas, Dr. Ota-ku, Minami Magome, 143 Tokyo-to (JP); Hub, Hans-Henning, Dr., W-6520 Worms 23 (DE)

(57) **Zusammenfassung**

Bei dem neuen Extrusionsverfahren zur Herstellung von ionisch vernetzten Ethylencopolymerisaten (Ionomeren) werden Ethylencopolymerisate, welche 0,1 bis 20 Mol-% α,β-ethylenisch ungesättigter Carbonsäuren und/oder α,β-ethylenisch ungesättigter Comonomere mit Carboxylgruppen liefernden Resten einpolymerisiert enthalten, mit flüssigen und/oder gelösten Metallverbindungen bei Temperaturen oberhalb des Schmelzpunkts der Ethylencopolymerisate in einem Extruder gemischt, wonach die resultierenden Ionomeren entgast werden. Als Metallverbindungen werden solche der allgemeinen Formel I verwendet

MRₘR¹ₙR²ₓR³_{y} (I),

worin die Indices und die Variablen die folgende Bedeutung haben:
- M: Li, Na, K, Mg, Ca, Sr, Ba, Sc, Y, La, Ce, Pr, Nd, Sm, Eu, Gd, Tb, Dy, Ho, Er, Tm, Yb, Lu, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, B, Al, Ga, In, Tl, Si, Ge, Sn, Pb, As, Sb und Bi;
- R,R¹,R² und R³: C₁- bis C₂₀-Alkyl, C₅- bis C₂₀-Cycloalkyl, C₁- bis C₂₀-Alkoxy, C₁- bis C₂₀-Alkylthio, C₅- bis C₂₀-Aryl, C₇- bis C₂₀-Alkylaryl und C₆- bis C₂₀-Aryloxy;
- m,n,x und y: 0 oder eine Zahl zwischen 1 und 4
mit der Maßgabe, daß die Summe von m+n+x+y gleich der Wertigkeit von M ist.

## Beschreibung

Die Erfindung betrifft ein neues Verfahren zur Herstellung von ionisch vernetzten Ethylencopolymerisaten (Ionomeren), bei welchem man Ethylencopolymerisate, welche 0,1 bis 20 Mol-% α,β-ethylenisch ungesättigter Carbonsäuren und/oder α,β-ethylenisch ungesättigter Comonomere mit Carboxylgruppen liefernden Resten einpolymerisiert enthalten, mit mindestens einer flüssigen und/oder gelösten Metallverbindung bei Temperaturen oberhalb des Schmelzpunktes der Ethylencopolymerisate in einem Extruder vermischt und hiernach die resultierenden Ionomere entgast.

Bei derartigen Extrusionsverfahren werden thermoplastische, carboxylgruppenhaltige, ionisch vernetzte Ethylencopolymerisate (Ionomere) erhalten, deren Carboxylgruppen zum Teil frei vorliegen und zum Teil mit Metallkationen verbunden sind, so daß eine Quervernetzung zwischen den Polymerisatketten vorliegt.

Verfahren zur Herstellung von Ionomeren aus Carboxylgruppen enthaltenden Ethylencopolymerisaten sind z.B. aus der US-A-3 264 272 bekannt. So wird in dem Beispiel I dieser Patentschrift die Umsetzung eines Ethylen-Methacrylsäure-Copolymerisats mit einer Lösung von Natriummethoxid in Methanol auf einem Mahlwerk beschrieben. Indes weist ein solches Verfahren gegenüber Extrusionsverfahren, was den Durchsatz und den kontinuierlichen Betrieb betrifft, erhebliche Nachteile auf.

Extrusionsverfahren zur Herstellung von Ionomeren aus carboxylgruppenhaltigen Ethylencopolymerisaten werden in den europäischen Patentanmeldungen EP-A-0 193 110, 0 349 827, 0 349 828 und 0 349 826 beschrieben. Während die aus der EP-A-0 193 110 und der EP-A-0 349 828 bekannten Verfahren von wäßrigen Metallsalzlösungen Gebrauch machen, welche der Polymerisatschmelze in einem Zweiwellenextruder zudosiert werden, werden bei dem Verfahren der EP-A-0 349 827 zuerst feste Metallverbindungen und anschließend Wasser und bei der EP-A-0 349 826 ein weiteres Ionomer von hohem Neutralisationsgrad zu der Polymerisatschmelze im Extruder hinzugegeben.

Der Nachteil bei diesen Verfahren liegt darin, daß bei der Umsetzung der Metallverbindungen mit der Polymerisatschmelze Nebenprodukte wie beispielsweise anorganische oder organische Säuren entstehen, welche insbesondere in der Gegenwart von Wasser eine starke Korrosionswirkung entfalten und die Verwendung teurer, korrosionsfester Werkstoffe in den Extrudern notwendig machen. Hiervon abgesehen, lassen sich die resultierenden Ionomere nur schlecht von Wasser- und Säureresten sowie von Resten unangenehm riechender Verbindungen befreien. Bei dem Verfahren der EP-A-0 349 826 werden diese Probleme lediglich in das Verfahren zur Herstellung des Ionomeren hohen Neutralisationsgrades verlagert, welches mit dem Ethylencopolymerisat umgesetzt werden soll.

Aufgabe der vorliegenden Erfindung war es, ein neues Verfahren zur Herstellung von ionisch vernetzten Ethylencopolymerisaten (Ionomeren) der eingangs genannten Art zu finden, bei welchem die Nachteile des Standes der Technik nicht mehr länger auftreten und welches geruchs- und nebenproduktfreie Ionomere liefert, die sich zu optisch einwandfreien Folien verarbeiten lassen.

Diese Aufgabe konnte durch die Verwendung flüssiger und/oder in organischen Lösungsmitteln gelöster metallorganischer Verbindungen gelöst werden. Im Hinblick auf den Stand der Technik war es nicht zu erwarten gewesen, daß die Nachteile der bekannten Verfahren mit Hilfe der erfindungsgemäßen Maßnahme beseitigt werden konnten.

Demgemäß handelt es sich bei dem Gegenstand der vorliegenden Erfindung um ein neues Verfahren zur Herstellung von ionisch vernetzten Ethylencopolymerisaten (Ionomeren) durch Mischen von Ethylencopolymerisaten, welche 0,1 bis 20 Mol-% α,β-ethylenisch ungesättigter Carbonsäuren und/oder α,β-ethylenisch ungesättigter Comonomere mit Carboxylgruppen liefernden Resten einpolymerisiert enthalten, mit mindestens einer flüssigen und/oder gelösten Metallverbindung bei Temperaturen oberhalb des Schmelzpunktes der Ethylencopolymerisate in einem Extruder und Entgasen der resultierenden Ionomeren. Dieses neue Verfahren ist dadurch gekennzeichnet, daß man Metallverbindungen der allgemeinen Formel I verwendet,

MRₘR¹ₙR²ₓR³_{y} (I)

worin die Indizes und die Variablen die folgende Bedeutung haben:
- M: Li, Na, K, Mg, Ca, Sr, Ba, Sc, Y, La, Ce, Pr, Nd, Sm, Eu, Gd, Tb, Dy, Ho, Er, Tm, Yb, Lu, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, B, Al, Ga, In, Tl, Si, Ge, Sn, Pb, As, Sb und Bi;
- R,R¹,R² und R³: C₁- bis C₂₀-Alkyl, C₅- bis C₂₀-Cycloalkyl, C₁- bis C₂₀-Alkoxy, C₁- bis C₂₀-Alkylthio, C₅- bis C₂₀-Aryl, C₇- bis C₂₀-Alkylaryl und C₆- bis C₂₀-Aryloxy;
- m,n,x und y: 0 oder eine Zahl zwischen 1 und 4;
mit der Maßgabe, daß die Summe von m+n+x+y gleich der Wertigkeit von M ist.

Im folgenden wird das neue Verfahren zur Herstellung von ionisch vernetzten Ethylencopolymerisaten (Ionomeren) der Kürze halber als "erfindungsgemäßes Verfahren" bezeichnet.

Für das erfindungsgemäße Verfahren ist es wesentlich, daß als flüssige und/oder gelöste Metallverbindung mindestens eine Metallverbindung der allgemeinen Formel I verwendet wird.

In der allgemeinen Formel I bedeutet M Lithium, Natrium, Kalium, Magnesium, Calcium, Strontium, Barium, Scandium, Yttrium, Lanthan, Cer, Praseodym, Neodym, Samarium, Europium, Gadolinium, Terbium, Dysprosium, Holmium, Erbium, Thulium, Ytterbium, Lutetium, Titan, Zirkon, Hafnium, Vanadin, Niob, Tantal, Chrom, Molybdän, Wolfram, Mangan, Rhenium, Eisen, Ruthenium, Osmium, Cobalt, Rhodium, Iridium, Nickel, Palladium, Platin, Kupfer, Silber, Gold, Zink, Cadmium, Quecksilber, Bor, Aluminium, Gallium, Indium, Thallium, Silicium, Germanium, Zinn, Blei, Arsen, Antimon und Wismut. Von diesen sind Lithium, Natrium, Kalium, Magnesium, Titan, Zirkon, Hafnium, Zink, Bor, Aluminium, Gallium, Silicium und Germanium vorteilhaft und werden deshalb bevorzugt verwendet. Besonders herausragende Ergebnisse werden erhalten, wenn man Metallverbindungen der allgemeinen Formel I verwendet, worin M für Natrium, Magnesium, Zink, Aluminium und Silicium steht.

In der allgemeinen Formel I können die Variablen R, R¹, R² und R³ gleich oder voneinander verschieden sein. Desgleichen können zwei oder drei Variablen, beispielsweise R und R¹ oder R, R¹ und R² gleich und von der anderen Variable R² oder R³ oder den anderen Variablen R² und R³ verschieden sein. Vorteilhafterweise sind in einer gegebenen Metallverbindung I die Variablen R, R¹, R² und R³ nicht verschieden voneinander.

Beispiele geeigneter Variablen oder Reste R, R¹, R² und R³ zum Aufbau der erfindungsgemäß zu verwendenden Metallverbindungen I sind C₁- bis C₂₀-Alkyl, C₅- bis C₂₀-Cycloalkyl, C₁- bis C₂₀-Alkoxy, C₁- bis C₂₀-Alkylthio, C₅- bis C₂₀-Aryl, C₇- bis C₂₀-Alkylaryl und C₆- bis C₂₀-Aryloxy.

Beispiele gut geeigneter C₁- bis C₂₀-Alkylreste sind Methyl, Ethyl, Propyl, Isopropyl, Butyl, sec.-Butyl, tert.-Butyl, Pentyl (Amyl), Hexyl, Heptyl, Octyl, Isooctyl, Nonyl, Decyl, Isodecyl, Undecyl, Dodecyl, Tridecyl, Tetradecyl, Pentadecyl, Hexadecyl, Heptadecyl, Octadecyl, Nonadecyl und Eicosanyl, von denen Hexyl, Heptyl, Octyl, Nonyl und Isodecyl besonders vorteilhaft sind und deshalb besonders bevorzugt verwendet werden.

Beispiele gut geeigneter C₅- bis C₂₀-Cycloalkylreste sind Cyclopentyl, Cyclohexyl und Methylcyclohexyl, von denen Cyclohexyl besonders vorteilhaft ist und deshalb besonders bevorzugt verwendet wird.

Beispiele gut geeigneter C₁- bis C₂₀-Alkoxy- und -Alkylthioreste sind solche, welche am Sauerstoff oder am Schwefel die vorstehend genannten Alkylreste aufweisen. Von diesen sind die C₁- bis C₂₀-Alkoxyreste vorteilhaft und werden deshalb bevorzugt verwendet. Beispiele besonders vorteilhafter C₁- bis C₂₀-Alkoxyreste sind Methoxy, Ethoxy, Propoxy, Isopropoxy, n-Butoxy, sec.-Butoxy, tert.-Butoxy und Amyloxy. Diese Reste werden besonders bevorzugt verwendet.

Beispiele für C₅- bis C₂₀-Arylreste, welche für den Aufbau der erfindungsgemäß zu verwendenden Metallverbindungen I gut geeignet sind, sind Cyclopentadienyl, Phenyl und Naphthyl, von denen Phenyl besonders vorteilhaft ist und deshalb besonders bevorzugt verwendet wird.

Beispiele gut geeigneter C₇- bis C₂₀-Alkylarylreste sind Benzyl und 2-Phenyl-eth-1-yl, von denen Benzyl besonders vorteilhaft ist und deshalb besonders bevorzugt angewendet wird.

Beispiele für C₆- bis C₂₀-Aryloxyreste, welche für den Aufbau der erfindungsgemäß zu verwendenden Metallverbindungen I gut geeignet sind, sind Phenoxy, 2-Methylphenoxy, 3-Methylphenoxy, 4-Methylphenoxy, 2,3-Dimethylphenoxy, 2,4-Dimethylphenoxy, 2,6-Dimethylphenoxy und Naphthoxy, von denen der Phenoxyrest besonders vorteilhaft ist und deshalb besonders bevorzugt verwendet wird.

Von all den vorstehend genannten Resten R, R¹, R² und R³ sind Hexyl, Heptyl, Octyl, Nonyl, Isodecyl, n-Butoxy und Amyloxy, insbesondere aber Octyl, n-Butoxy und Amyloxy ganz besonders vorteilhaft und werden deshalb ganz besonders bevorzugt verwendet.

In der allgemeinen Formel I stehen die Indices m, n, x und y für 0 oder eine Zahl zwischen 1 und 4 mit der Maßgabe, daß die Summe von m+n+x+y gleich der Wertigkeit von M ist. Mit anderen Worten, die besagte Summe ist - je nach verwendetem M - gleich 1, 2, 3 oder 4.

Demnach sind für die Durchführung des erfindungsgemäßen Verfahrens alle Metallverbindungen I geeignet, welche flüssig sind und/oder in einem organischen Lösungsmittel ohne schädliche Zersetzung aufgelöst werden können und welche die vorstehend genannten Reste R, R¹, R² und R³ und die vorstehend genannten Metalle M enthalten. Metallverbindungen I dieser Art sind üblich und bekannt und zum Teil im Handel erhältlich. Beispiele ganz besonders gut geeigneter Metallverbindungen I, welche bei der Durchführung des erfindungsgemäßen Verfahrens besondere Vorteile aufweisen und zu Ionomeren mit herausragendem anwendungstechnischem Eigenschaftsprofil führen, sind Octylnatrium, Dioctylmagnesium, Dioctylzink, Tris-(n-octyl)aluminium, Tris-(n-amyloxy)aluminium und Tetra-(n-butoxy)silan. Weitere Vorteile ergeben sich, wenn man diese ganz besonders gut geeigneten Metallverbindungen I in einem inerten aliphatischen Lösungsmittel wie Petrolether, Benzin, Cyclohexan, Methylcyclohexan, Heptan, Octan oder Isodecan gelöst anwendet.

Des weiteren geht das erfindungsgemäße Verfahren von Ethylencopolymerisaten aus.

Beispiele geeigneter Ethylencopolymerisate sind Copolymerisate des Ethylens, welche 0,1 bis 20 Mol-%, insbesondere 0,25 bis 10 Mol-%, bezogen auf das Copolymerisat, an α,β-ethylenisch ungesättigten Carbonsäuren und/oder an α,β-ethylenisch ungesättigten Comonomeren mit Carboxylgruppen liefernden Resten einpolymerisiert enthalten.

Beispiele geeigneter α,β-ethylenisch ungesättigter Carbonsäuren sind Acrylsäure, Methacrylsäure, Itaconsäure, Maleinsäure und Fumarsäure.

Beispiele geeigneter α,β-ethylenisch ungesättigter Comonomere, welche Carboxylgruppen liefernde Reste aufweisen, sind Maleinsäuremonomethylester, Maleinsäureanhydrid und tert.-Butylacrylat, welche während oder nach der Copolymerisation durch Hydrolyse und/oder Pyrolyse die gewünschten Carboxylgruppen liefern.

Die Ethylencopolymerisate können neben den vorstehend genannten Comonomeren noch andere mit Ethylen copolymerisierbare Comonomere einpolymerisiert enthalten (vgl. EP-A-0 106 999). Beispiele geeigneter weiterer Comonomerer sind Ester der (Meth)Acrylsäure, Mono- und Diester der Maleinsäure und Fumarsäure, Amide monoethylenisch ungesättigter Carbonsäuren, insbesondere (Meth)Acrylsäureamid und die N-Mono- und N,N-Dialkylamide der (Meth)Acrylsäure. Die Ethylencopolymerisate sind an sich bekannt und werden beispielsweise in der GB-A-2 091 745, US-A-3 520 861, US-A-3 264 272, GB-A-1 011 981, US-A-3 404 134 und US-A-3 969 434 beschrieben. Weitere Beispiele geeigneter Ethylencopolymerisate sind noch die entsprechenden Pfropfmischpolymerisate, welche z.B. aus der DE-A-36 39 564 oder der DE-A-36 39 566 bekannt sind.

Die Schmelzindices der Ethylencopolymerisate liegen im allgemeinen bei 0,1 bis 500 g/10 min, gemessen nach DIN 53 735 bei 190°C und einer Auflagekraft von 2,16 kp. Für die Verwendung in dem erfindungsgemäßen Verfahren sind Ethylencopolymerisate mit einem Schmelzindex von 2 bis 80 g/10 min besonders gut geeignet. Im allgemeinen liegen die Schmelzpunkte der Ethylencopolymerisate bei 70 bis 115°C.

Bei dem erfindungsgemäßen Verfahren können die erfindungsgemäß zu verwendenden Metallverbindungen I und die Ethylencopolymerisate auf einem Extruder in einem Mengenverhältnis miteinander umgesetzt werden, daß mindestens 10 Mol-% der Säuregruppierungen im Ethylencopolymerisat neutralisiert werden. Sofern dies erwünscht ist, können auch Mengenverhältnisse gewählt werden, welche zu einem Neutralisationsgrad von 100 Mol-% der im Ethylencopolymerisat vorhandenen Carboxylgruppen führen. Die Bestimmung des Neutralisationsgrades der in erfindungsgemäßer Verfahrensweise gebildeten Ionomeren kann hierbei durch IR-Analysen, durch Titration oder elementaranalytisch durch Metallanalyse erfolgen.

Bei dem erfindungsgemäßen Verfahren erfolgt die ionische Vernetzung des Ethylencopolymerisats, d.h. die Bildung des Ionomeren, in einem Extruder. Beispiele geeigneter Extruder sind die Zweiwellenextruder der Firma Werner & Pfleiderer. Ein Beispiel eines gut geeigneten Zweiwellenextruders dieser Firma ist die ZSK 57.

Bei dem erfindungsgemäßen Verfahren wird das vorstehend im Detail beschriebene Ethylencopolymerisat in den gekühlten, mit Stickstoff überlagerten Einzug des Extruders dosiert und bei Temperaturen von 140 bis 180°C, insbesondere 140 bis 160°C, aufgeschmolzen. Im allgemeinen wird diese Zone, worin das Ethylencopolymerisat aufgeschmolzen wird, als Schmelzzone bezeichnet.

Die Schmelze des Ethylencopolymerisats wird dann von der Schmelzzone in die Reaktionszone des Extruders weitertransportiert, wo es mit der Metallverbindung I vermischt und zum Ionomeren umgesetzt wird. Im allgemeinen wird diese Zone des Extruders als Reaktionszone bezeichnet. Zum Zwecke der Umsetzung wird die Metallverbindung I vorteilhafterweise als Lösung in einem organischen Lösungsmittel in den Extruder eingepumpt. Üblicherweise hat die Reaktionszone eine Länge von mindestens 3 D, wobei D für den Schneckendurchmesser steht. Im allgemeinen liegen die Temperaturen in der Reaktionszone bei 180 bis 280, insbesondere 200 bis 260°C.

Im weiteren Verlauf des erfindungsgemäßen Verfahrens wird das in der Reaktionszone gebildete Ionomere in die Entgasungszone des Extruders weitertransportiert. Die Entgasungszone ist vorzugsweise mehr als 15 D lang und mit mindestens zwei Entgasungsdomen oder -stutzen ausgerüstet, an welche abgestuft Unterdruck angelegt wird. Üblicherweise liegt der Unterdruck bei 800 bis 20 mbar. Die Temperaturen in der Entgasungszone liegen üblicherweise bei 200 bis 270°C, wobei Temperaturen zwischen 220 und 260°C bevorzugt sind. Für das erfindungsgemäße Verfahren erweist es sich als vorteilhaft, die Ionomeren bei 250 bis 260°C zu entgasen.

Bei dem erfindungsgemäßen Verfahren liegt die mittlere Verweilzeit der Reaktanden in der Reaktionszone bei 10 bis 15 S; die mittlere Verweilzeit des gebildeten Ionomeren in der Entgasungszone liegt bei 40 bis 60 s, wobei unter mittlerer Verweilzeit die Zeit verstanden wird, in welcher die Hälfte der durch das Verweilzeitspektrum erfaßten Partikel die jeweilige Extruderzone passiert hat.

Das erfindungsgemäße Verfahren liefert in besonders einfacher und zuverlässiger Weise geruchsfreie Ionomere mit vorzüglichem anwendungstechnischem Eigenschaftsprofil, welche sich hervorragend für die Herstellung von Mischungen aus mindestens zwei voneinander verschiedenen Polymeren (Polymerblends), von Haftvermittlern, von Spritzgußteilen, von Beschichtungsfolien und von Isoliermaterialien oder als Elastomere eignen. Insbesondere aber eignen sich die in erfindungsgemäßer Verfahrensweise hergestellten Ionomere für die Herstellung von stippen- und partikelfreien Blasfolien mit hervorragenden optischen Eigenschaften. Diese Blasfolien können vor allem als Verpackungsmaterial auf dem Lebensmittelsektor verwendet werden.

### Beispiele

### Herstellung eines Ionomeren in erfindungsgemäßer Verfahrensweise

In den Einzug eines Zweiwellenextruders ZSK 57 der Firma Werner & Pfleiderer mit einem Längen/Durchmesser-Verhältnis von 39 wurden 100 kg/h eines Ethylen-Acrylsäure-Copolymerisats (8 Gew.% Acrylsäure; Schmelzindex 15 g/10 min, bestimmt nach DIN 53 735) zudosiert. Die Länge der Einzugszone betrug das 3 1/2fache des Schneckendurchmessers D.

Das Ethylencopolymerisat wurde im Extruder in einem Längenbereich von 9 D bei 140°C aufgeschmolzen und in die Reaktionszone einer Länge von 5 D überführt.

In die Reaktionszone wurden 10,2 kg/h einer 20 %igen Lösung von Tris-(n-octyl)aluminium in n-Octan eingespritzt und mit dem geschmolzenen Ethylencopolymerisat vermischt. Das resultierende Gemisch wurde homogenisiert, und die Reaktanden wurden bei 220°C zur Reaktion gebracht. Das als Lösungsmittel verwendete und als Nebenprodukt anfallende n-Octan wurde in einer nachfolgenden zweistufigen Entgasungszone von 13,5 D Länge im Vakuum bei 220°C entfernt.

Hierbei wurde an dem ersten Entgasungsstutzen ein Druck von ca. 200 mbar und am zweiten Entgasungsstutzen ein Druck von ca. 20 mbar aufrechterhalten.

Die mittlere Verweilzeit lag in der Reaktionszone bei 12 s und in der Entgasungszone bei 30 s.

Über die am Ende der Austragszone (Länge 6,5 D; Temperatur 220°C) angebrachte Düsenplatte wurde das Ionomer ausgetragen. Im erhaltenen Endprodukt waren 14,8 Mol-% der Carboxylgruppen mit Aluminiumionen neutralisiert; der Schmelzindex des Ionomeren lag bei 6,0 g/10 min. Das Ionomer war völlig geruchlos und stippenfrei. Es eignete sich ganz besonders gut für den Beschichtungs- und Verpackungssektor.

### Beispiel 2

### Herstellung eines Ionomeren in erfindungsgemäßer Verfahrensweise

Beispiel 1 wurde wiederholt, nur daß anstelle von 10,2 20,4 kg/h einer 20 %igen Lösung von Tris-(n-octyl)aluminium in n-Octan verwendet wurde. Im resultierenden Ionomeren waren 31,2 Mol-% der Carboxylgruppen mit Aluminiumionen neutralisiert. Der Schmelzindex des Ionomeren lag bei 1,9 g/10 min. Auch dieses Produkt war völlig geruchlos und stippenfrei und eignete sich daher ganz vorzüglich für den Beschichtungs- und Verpackungssektor.

### Beispiel 3

### Herstellung eines Ionomeren in erfindungsgemäßer Verfahrensweise

Beispiel 1 wurde wiederholt, nur daß anstelle von Tris-(n-octyl)aluminium Tris-(n-amyloxy)aluminium 20 %ig in Isodecan gelöst verwendet wurde. Auch hierbei wurde ein Ionomer erhalten, welches völlig geruchlos und stippenfrei war und Folien mit vorzüglicher Folienmechanik und guten optischen Folieneigenschaften lieferte. Das Ionomer war demnach ganz besonders für den Einsatz im Verpackungs- und Beschichtungssektor geeignet.

### Beispiel 4

### Herstellung eines Ionomeren in erfindungsgemäßer Verfahrensweise

Beispiel 1 wurde wiederholt, nur daß anstelle von 10,2 kg/h einer 20 %igen Lösung von Tris-(n-octyl)aluminium in n-Octan 21,4 kg/h einer 25 %igen Lösung von Tetra-(n-butoxy)silan in Isodecan verwendet wurde.

Es resultierte ein Ionomer, dessen Carboxylgruppen zu 13,7 Mol-% mit SiO-Gruppen vernetzt waren. Der Schmelzflußindex des Ionomeren lag bei 1,4 g/10 min. Auch dieses Ionomer war völlig geruchlos und stippenfrei. Es eignete sich nicht nur ganz besonders gut für den Beschichtungs- und Verpackungssektor, sondern auch hervorragend für die Herstellung von Isoliermaterialien.

## Patentansprüche

1. Verfahren zur Herstellung von ionisch vernetzten Ethylencopolymerisaten (Ionomeren) durch Mischen von Ethylencopolymerisaten, welche 0,1 bis 20 Mol-% α,β-ethylenisch ungesättigter Carbonsäuren und/oder α,β-ethylenisch ungesättigter Comonomere mit Carboxylgruppen liefernden Resten einpolymerisiert enthalten, mit einer flüssigen und/oder gelösten Metallverbindung bei Temperaturen oberhalb des Schmelzpunktes des Ethylencopolymerisats in einem Extruder und Entgasen der resultierenden Ionomeren, dadurch gekennzeichnet, daß man Metallverbindungen der allgemeinen Formel I verwendet
MRₘR¹ₙR²ₓR³_{y} (I),
worin die Indizes und die Variablen die folgende Bedeutung haben:
M Li, Na, K, Mg, Ca, Sr, Ba, Sc, Y, La, Ce, Pr, Nd, Sm, Eu, Gd, Tb, Dy, Ho, Er, Tm, Yb, Lu, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, B, Al, Ga, In, Tl, Si, Ge, Sn, Pb, As, Sb und Bi;
R,R¹,R² und R³ C₁- bis C₂₀-Alkyl, C₅- bis C₂₀-Cycloalkyl, C₁- bis C₂₀-Alkoxy, C₁- bis C₂₀-Alkylthio, C₅- bis C₂₀-Aryl, C₇- bis C₂₀-Alkylaryl und C₆- bis C₂₀-Aryloxy;
m,n,x und y 0 oder eine Zahl zwischen 1 und 4;
mit der Maßgabe, daß die Summe von m+n+x+y gleich der Wertigkeit von M ist.

2. Das Verfahren nach Anspruch 1, dadurch gekennzeichnet, daß M für Li, Na, K, Mg, Ti, Zr, Hf, Zn, B, Al, Ga, Si und Ge steht.

3. Das Verfahren nach Anspruch 1 oder 2, dadurch gekennzeichnet, daß man Lösungen der Metallverbindungen der allgemeinen Formel I in organischen Lösungsmitteln verwendet.

4. Das Verfahren nach einem der Ansprüche 1 bis 3, dadurch gekennzeichnet, daß man
(1) das Ethylencopolymerisat auf dem Extruder in der Schmelzzone aufschmilzt,
(2) die resultierende Polymerschmelze in der Reaktionszone mit der Metallverbindung der allgemeinen Formel I unter Bildung des Ionomeren umsetzt,
(3) das Ionomer in der Entgasungszone vollständig entgast und
(4) das entgaste Ionomer aus dem Extruder austrägt.

5. Verwendung der gemäß einem der Ansprüche 1 bis 4 hergestellten Ionomeren zur Herstellung von Mischungen aus mindestens zwei voneinander verschiedenen Polymeren (Polymerblends), von Haftvermittlern, von Spritzgußartikeln, von Beschichtungsfolien und von Isoliermaterialien sowie als Elastomer.
